# EUROPÄISCHE PATENTANMELDUNG

(11) **EP 1 628 247 A1**
(43) Veröffentlichungstag der Anmeldung: **22.02.2006**
(21) Anmeldenummer: 04019878.0
(22) Anmeldetag: 21.08.2004
(51) Int. Cl.: G06Q 10/00

(54) **Datenbank für Buchhaltungszwecke**

(71) Anmelder: SAP AG, 69190 Walldorf (DE)
(72) Erfinder: Bernet, Kerstin, 69245 Bammental (DE); Liebold Werner, 69168 Wiesloch (DE); Dopf Georg, 68723 Schwetzingen (DE); Raubeck Rüdiger, 76275 Ettlingen (DE); Reccius Andreas, 69190 Walldorf (DE)
(74) Vertreter: Jany, Peter

(57) **Zusammenfassung**

Die Erfindung betrifft ein Verfahren, computerimplementiertes Verfahren zum Erstellen einer Datenbank für Buchhaltungszwecke, mit der sich Abschlüsse für die Rechnungslegung von organisatorischen Einheiten eines Unternehmens erstellen lassen, umfassend die folgenden Schritte:
- Speichern von Belegdatensätzen aus Buchungsbelegen in einer Belegdatenbank, wobei die Belegdatensätze ein Belegkopf und ein Datenteil umfassen, wobei der Datenteil Einträge für mindestens zwei Positionen aufweist, die jeweils einen Buchungsbetrag und ein zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle.

Erfindungsgemäß ist vorgesehen, daß
- vor dem Berechnen von Summen für die Summeneinträge der Summentabelle eine anteilige Zuordnung von mindestens einer Position des Belegdatensatzes zu zwei oder mehreren organisatorischen Einheiten des Unternehmens erfolgt,
- wobei aus der mindestens einen Position nach computerimplementierten Regeln Teilpositionen erzeugt werden, in den Teilpositionen der Buchungsbetrag der Position in anteilige Teilbeträge aufgeteilt und jede Teilposition zusammen mit ihrem Teilbetrag einer der organisatorischen Einheiten zugeordnet wird,
- in den Summeneinträgen für jede organisatorische Einheit, der eine oder mehrere Teilpositionen zugeordnet werden, jeweils mindestens eine Summe gespeichert wird,
- die Summen für die organisatorischen Einheiten nur mit Buchungsbeträgen aus Positionen oder Teilpositionen berechnet werden, die der jeweiligen organisatorischen Einheit zugeordnet sind.

## Beschreibung

Die Erfindung bezieht sich auf ein computerimplementiertes Verfahren zum Erstellen einer Datenbank für Buchhaltungszwecke, mit der sich Abschlüsse für die Rechnungslegung eines Unternehmens erstellen lassen.

Viele Konzerne müssen heute ihre Abschlüsse parallel nach mehreren Rechnungslegungsvorschriften erstellen. Ein deutscher Konzern, der an einer US-amerikanischen Börse notiert ist, muß beispielsweise sowohl einen USGAAP und/oder IAS-Abschluß als auch einen Abschluß nach HGB vorlegen. Dazu kommen unter Umständen noch weitere Abschlüsse, z.B. für Tochterfirmen in asiatischen Ländern entsprechend den dort geltenden lokalen Vorschriften. Neben diesen gesetzlich vorgeschriebenen Abschlüssen besteht ein Bedarf, für verschiedene organisatorische Einheiten eines Unternehmens intern möglichst aussagekräftige Abschlüsse zu erstellen, um der Geschäftsleitung ein möglichst umfassendes Bild über die Entwicklung einzelner Projekte oder Unternehmenssegmente oder Produkte oder Produktgruppen zu geben. Bei den organisatorischen Einheiten kann es sich beispielsweise um Kostenstellen, Profitcenter, Geschäftssegmente oder Geschäftssparten handeln. Beispielweise kann in der Medienbranche eine solche organisatorische Einheit auch einen einzelnen Titel betreffen oder in der Versicherungsbranche eine einzelne Versicherungsart oder Versicherungsparte.

Basis für alle Geschäftsberichte eines Konzerns sind die einzelnen, durch einen Beleg zu dokumentierenden Geschäftsvorfälle. Ein Geschäftsvorfall stellt z.B. eine von einem Lieferanten eingehende Rechnung dar oder eine Entnahme einer Ware aus einem Lager für die Produktion. Bei großen Konzernen fallen täglich mehrere Tausend solcher Geschäftsvorfälle an. Aus diesem Grund läßt sich die Buchhaltung für ein großen Konzern mit vertretbarem Aufwand nur durch Einsatz von Datenverarbeitungsanlagen bewältigen.

Da die gesetzlichen Vorschriften nicht für alle organisatorischen Einheiten eines Unternehmens einen eigenen Abschluß verlangen, werden im Stand der Technik interne Berichte über organisatorische Einheiten eines Unternehmens, beispielsweise Projekte oder Kostenstellen, häufig nur teilweise auf der Grundlage von in der zentralen Buchhaltungsdatenbank eines Unternehmens erfaßten Daten erstellt und durch Schätzungen zum Aufwand oder Ertrag der interessierenden organisatorischen Einheit ergänzt.

Da viele Geschäftsvorfälle mehrere organisatorische Einheiten eines Unternehmens betreffen, sind in der Datenbank für die Konzernbuchhaltung die Daten für eine separate Buchhaltung über einzelne organisatorische Einheiten eines Unternehmens in der Regel nicht vorhanden. Besteht für interne Berichte ein Bedarf an einer Buchhaltung über einzelne organisatorische Einheiten eines Unternehmens, so erfolgt diese deshalb regelmäßig auf der Grundlage eigener Datenbanken, die nicht in die Datenbank der Konzernbuchhaltung integriert sind. Zwar ist dieser Ansatz sehr flexibel, da zu jedem einzelnen Projekt bei Bedarf eine beliebig präzise Buchhaltung auf einer Datenbank erfolgen kann, die durch Schätzungen ergänzt zur Grundlage interner Berichte gemacht werden kann. Die fehlende Integration in die Datenbank der Konzernbuchhaltung erschwert allerdings eine effiziente Kontrolle und führt zu Fehlern. Insbesondere müßten die verschiedenen Datenbanken aufwendig miteinander abgeglichen werden, um ein konsistentes Bild verschiedener organisatorischer Einheiten eines Konzerns liefern zu können.

Aufgabe der Erfindung ist es daher, einen Weg aufzuzeigen, wie Datenbanken für Buchhaltungszwecke derart verbessert werden können, daß Kontenabschlüsse für verschiedene organisatorische Einheiten eines Konzerns mit geringerem Aufwand erstellt und miteinander abgeglichen werden können.

Diese Aufgabe wird gelöst durch ein computerimplementiertes Verfahren zum Erstellen einer Datenbank für Buchhaltungszwecke, mit der sich Abschlüsse für die Rechnungslegung eines Unternehmens erstellen lassen, umfassend die folgenden Schritte:
- Speichern von Belegdatensätzen aus Buchungsbelegen in einer Belegdatenbank, wobei die Belegdatensätze ein Belegkopf und ein Datenteil umfassen, wobei der Datenteil Einträge für mindestens zwei Positionen aufweist, die jeweils einen Buchungsbetrag und ein zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle,

bei dem erfindungsgemäß vorgesehen ist, daß
- vor dem Berechnen von Summen für die Summeneinträge der Summentabelle eine anteilige Zuordnung von mindestens einer Position des Belegdatensatzes zu zwei oder mehreren organisatorischen Einheiten des Unternehmens erfolgt,
- wobei aus der mindestens einen Position nach computerimplementierten Regeln Teilpositionen erzeugt werden, in den Teilpositionen der Buchungsbetrag der Position in anteilige Teilbeträge aufgeteilt und jede Teilposition zusammen mit ihrem Teilbetrag einer der organisatorischen Einheiten zugeordnet wird,
- in den Summeneinträgen für die organisatorischen Einheiten, denen Teilpositionen zugeordnet werden, jeweils eine Summe gespeichert wird,
- die Summen für die organisatorischen Einheiten nur mit Buchungsbeträgen aus Positionen oder Teilpositionen berechnet werden, die der jeweiligen organisatorischen Einheit zugeordnet sind.

Bei einem erfindungsgemäßen Verfahren wird die Datenhaltung in der Datenbank stark vereinfacht. Es entfällt ein aufwendiger Abgleich von Kontendaten und Werten. Dies verbessert die Wartbarkeit und auch die Systemperformance. Es können nämlich alle relevanten Informationen zu jedem Geschäftsvorfall eines Unternehmens in einer einzigen Datenbank erfaßt werden und darauf aufbauend sowohl Konzernabschlüsse gemäß gesetzlichen Rechnungslegungsvorschriften als auch Abschlüsse für interne Berichte über verschiedene organisatorische Einheiten wie Kostenstellen, Segmente, Produktgruppen, Produkte usw. erstellt werden. Weiter wird durch die vereinfachte Datenhaltung eine präzisere Erfassung der Kosten und Erträge einzelner organisatorischer Einheiten eines

Unternehmens möglich. Insbesondere ergeben Abschlüsse verschiedener organisatorischer Einheiten sowohl untereinander als auch mit dem Konzernabschluß ein konsistentes Bild ohne daß ein Abgleich verschiedener Datenbanken erforderlich wäre.

Beim Erfassen eines Geschäftsvorfalls trägt beispielsweise ein Buchhalter in den Datenteil eines Belegdatensatzes ein, welche organisatorische Einheit oder Einheiten des Unternehmens davon betroffen sind. Ein besonderer technischer Vorteil des erfindungsgemäßen Verfahrens liegt darin, daß zum Erfassen der Kosten und/oder Erträge der einzelnen organisatorischen Einheiten eines Unternehmens in der Datenbank keine zusätzlichen Konten geschaffen werden müssen. Dieser Vorteil kommt insbesondere dann zum Tragen, wenn technische Eigenschaften von Konten in der Datenbank geändert werden müssen.

Betrifft ein Geschäftsvorfall mehrere organisatorische Einheiten, so kann der Buchhalter in den Datenteil des Belegdatensatzes z.B. mittels einer angebotenen Bildschirmmaske mehrere Belegpositionen eintragen, in denen jeweils ein Teilbetrag auf einem der beiden Konten, d.h. Konto oder Gegenkonto, der jeweiligen organisatorischen Einheit zugeordnet wird. Zusätzliche Belegpositionen mit entsprechenden Teilbeträgen für das zugehörige (Gegen)-Konto müssen nicht eingegeben werden. Ein erfindungsgemäßes Computerprogramm erzeugt automatisch weitere Belegpositionen bzw. Teilpositionen, in denen der Buchungsbetrag entsprechend dem Verhältnis der eingegebenen Teilbeträge auch für das jeweils andere Konto (Gegenkonto) der entsprechenden organisatorischen Einheit zugeschrieben wird.

Eine Aufteilung von Belegpositionen auf Teilpositionen kann in einer bevorzugten Ausführungsform auch nach einem für Geschäftsvorfälle eines bestimmten Typs fest vorgegebenen Schlüssel erfolgen. Die Aufteilung gemäß einem fest vorgegebenen Schlüssel ist beispielsweise für Geschäftsvorfälle aus dem Gemeinkostengebiet wie Strom- oder Wasserrechnungen geeignet, die auf diese Weise in Teilbeträgen auf einem Konto und einem Gegenkonto den verschiedenen organisatorischen Einheiten eines Unternehmens zugeordnet werden können, ohne daß manuell eine Aufteilung bei jeder einzelnen Rechnung vorgenommen werden muß.

Die Erfindung wird nachfolgend anhand eines Ausführungsbeispiels unter Bezugnahme auf die zugehörigen Figuren näher erläutert. Die in diesem Zusammenhang beschriebenen Besonderheiten der Erfindung können einzeln oder in Kombination verwendet werden, um bevorzugte Ausgestaltungen der Erfindung zu schaffen. Es zeigen:
- Fig. 1: eine Eingabemaske für Belegdatensätze;
- Fig. 2: eine Erfassungssicht eines Belegdatensatzes;
- Fig. 3: eine hauptbuchabhängige Sicht des Belegdatensatzes;
- Fig. 4: ein Diagramm zur Erläuterung eines Belegsplitts am Beispiel einer Rechnungsbuchung;
- Fig. 5: ein Diagramm zur Erläuterung eines Belegsplitts am Beispiel einer Zahlungsbuchung; und
- Fig. 6: ein weiteres Diagramm zur Erläuterung eines Belegsplitts.

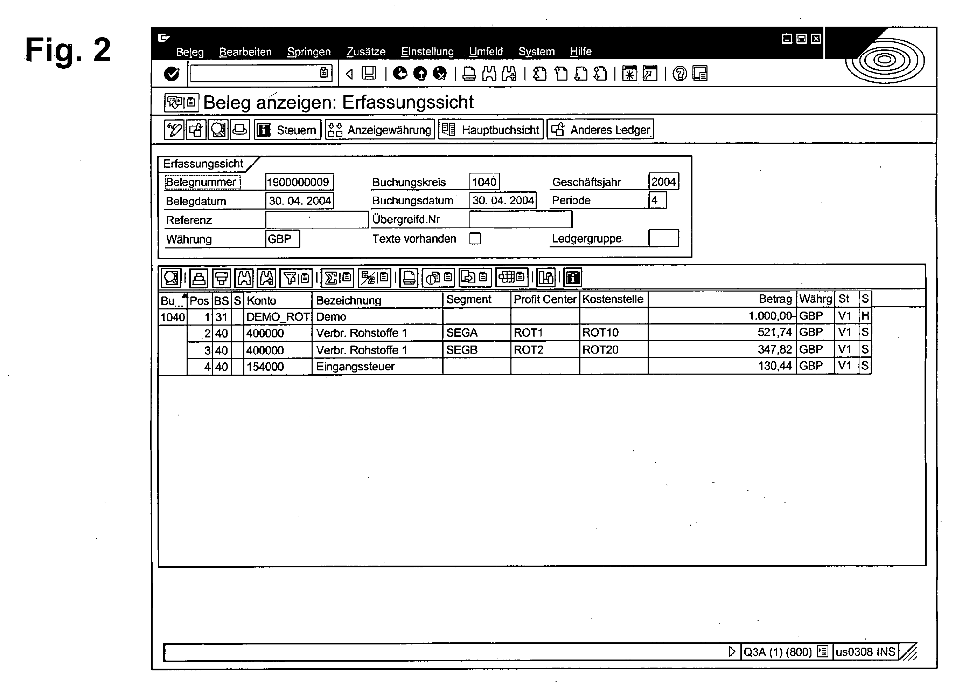

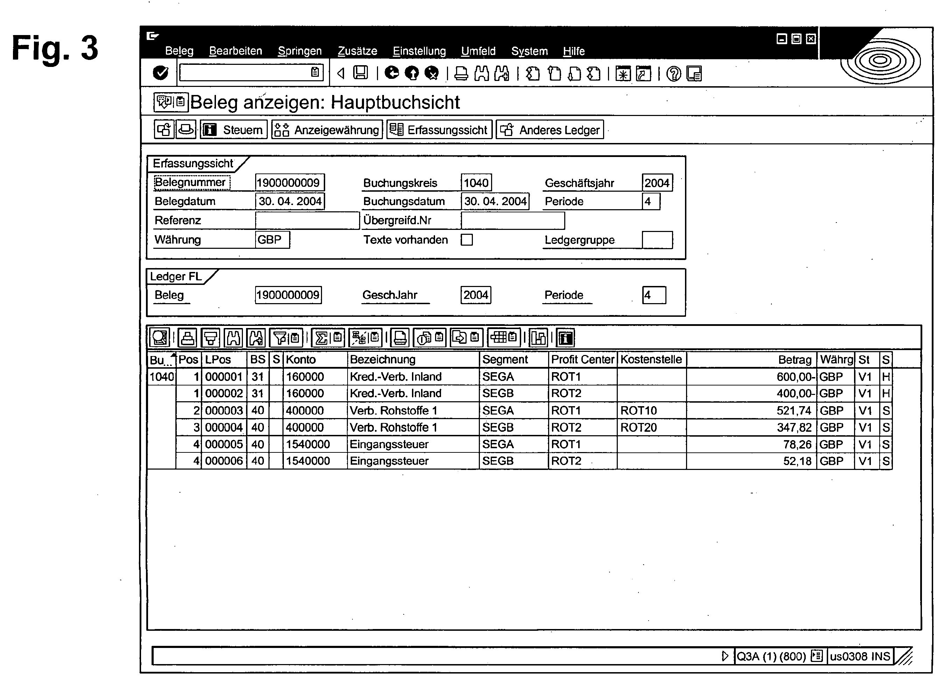

Eine Erfassungssicht (Fig. 2) zeigt hierin den Beleg in der Granularität an, in der ihn ein Buchhalter bei manueller Erfassung in einer Erfassungsmaske eingegeben hat, bzw. in der der Beleg bei automatischer Erfassung über eine Schnittstelle empfangen wurde. Die hauptbuchabhängige Sicht (Fig. 3) zeigt u.a. die für die Summenfortschreibung der betreffenden Hauptbücher gespeicherten Felder an.

Bei dem im folgenden beschriebenen Verfahren zum Erstellen einer Datenbank für Buchhaltungszwecke wird zu jedem Geschäftsvorfall ein Belegdatensatz in einer Belegdatenbank erzeugt, der einem Buchungsbeleg entspricht. Belegdatensätze werden manchmal auch als Einzelposteneinträge bezeichnet.

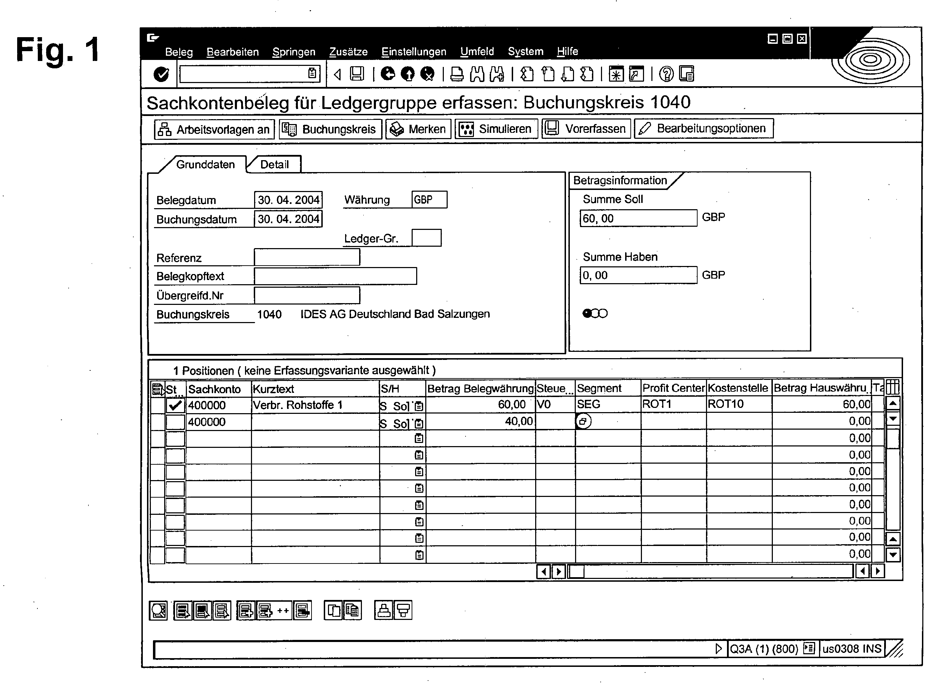

Figur 1 zeigt ein Beispiel einer Eingabemaske, die mehrere Eingabefelder aufweist und von einem erfindungsgemäßen Computerprogramm auf einem Bildschirm eines Computersystems erzeugt wird. In die Eingabefelder werden zum Erfassen eines Geschäftsvorfalls die zu einem Belegdatensatz gehörenden Daten eingegeben.

Ein Belegdatensatz umfaßt einen Belegkopf und einen Datenteil. In der Eingabemaske sind die Eingabefelder des Belegkopfs graphisch abgesetzt oberhalb von den Eingabefeldern des Datenteils, der im Beispiel mit "Position" überschrieben ist, angeordnet. In die Eingabefelder des Belegkopfs der Eingabemaske werden ein Buchungskreis, der das zugehörige (Tochter-)Unternehmen identifiziert, ein Belegdatum und ein Buchungsdatum eingegeben. Zusätzlich können in dem Belegkopf auch eine externe Referenznummer sowie zusätzliche Informationen gespeichert werden. Nicht alle im Belegkopf eines Belegdatensatzes gespeicherten Informationen müssen über die Eingabemaske eingegeben werden. Beispielsweise kann eine eindeutige Belegnummer automatisch von dem Computerprogramm vergeben und in dem Kopfteil gespeichert werden. Ferner kann das Computerprogramm aus dem Belegdatum die zugehörende Buchungsperiode (z.B. Quartal oder Geschäftsjahr) ermitteln und ebenfalls im Belegkopf speichern.

Zum Erstellen von Abschlüssen für mehrere verschiedene Hauptbücher, die jeweils verschiedenen Rechnungslegungsvorschriften entsprechen, hat die Eingabemaske zusätzlich das Eingabefeld "Ledger-Gruppe". In diesem Eingabefeld kann angegeben werden, für welche Hauptbücher (Ledger) der zugehörige Belegdatensatz relevant ist. Muß ein Geschäftsvorfall nach verschiedenen Rechnungslegungsvorschriften unterschiedlich verbucht werden, werden einfach mehrere Belegdatensätze erzeugt, die für die jeweils verschiedenen Rechnungslegungsvorschriften zu berücksichtigen und daher den jeweils verschiedenen Hauptbüchern zuzuordnen sind.

Indem für verschiedene Rechnungslegungsvorschriften jeweils ein eigenes Hauptbuch geführt wird, kann eine Datenbank erzeugt werden, mit der sich ohne großen Aufwand Kontenabschlüsse nach verschiedenen Rechnungslegungsvorschriften erzeugen lassen. Erfolgt in dem Eingabefeld "Ledger-Gruppe" kein Eintrag, so wird der zugehörige Einzelposteneintrag für alle Hauptbücher berücksichtigt, d.h. es wird davon ausgegangen, daß er für alle Rechnungslegungsvorschriften relevant ist.

Im einfachsten Fall genügt es, eine einzige Zeile der Eingabefelder des Datenteils auszufüllen und in dieser ein Konto und einen Buchungsbetrag anzugeben. Das dazu gehörende Gegenkonto kann in einfachen Fällen bei einer geeigneten Einstellung des Datenverarbeitungssystems automatisch ergänzt werden, so daß der Belegdatensatz einen vollständigen Buchungssatz widerspiegelt. Selbstverständlich kann das (Gegen-)Konto auch von dem Buchhalter eingegeben werden.

Figur 2 zeigt eine sogenannte Erfassungssicht eines Belegdatensatzes. Wie man daran erkennt, umfaßt der Datenteil eines Belegdatensatzes mehrere Positionen, die als Zeilen dargestellt sind und in denen unter anderem jeweils ein Buchungskonto und ein Buchungsbetrag angegeben sind. Bei dem gezeigten Ausführungsbeispiel wird in der ersten Zeile für den Kreditor DEMO ROT eine Verbindlichkeit im Haben gebucht. In den Zeilen 2 und 3 wird auf dem Konto 400000 der entsprechende Aufwand in zwei Teilbeträgen gegengebucht und den Segmenten SEG A und SEG B zugeordnet. Der Aufwand verteilt sich auf die beiden Segmente SEG A und SEG B zu ungleichen Teilen. In Zeile 4 wird ferner auf dem Konto 154000 im Soll eine Eingangssteuer verbucht, so daß insgesamt im Soll und im Haben derselbe Betrag verbucht wird.

Bei dem gezeigten Ausführungsbeispiel wird zusätzlich ein Teil der bereits im Belegkopf enthaltenen Informationen nochmals im Datenteil gespeichert, was eine Datenbank-Suche vereinfacht. Die redundant zusätzlich im Datenteil gespeicherten Informationen sind insbesondere der Buchungskreis und die Währung, in der die Buchung erfolgt. Weitere Eingabefelder der Eingabemaske des Datenteils können dazu dienen, einen Buchungsschlüssel (BS) und eine Information zur steuerlichen Behandlung der Buchung, beispielsweise über den anzuwendenden Mehrwertsteuersatz anzugeben.

Bei dem anhand der Zeilen 1 bis 4 der in Figur 2 gezeigten Erfassungssicht erläuterten Datenteil eines Belegdatensatzes handelt es sich um einen allgemeinen Datenteil. In diesem Datenteil sind hauptbuchunabhängige Buchungsinformationen gespeichert, die für alle betreffenden Hauptbücher relevant sind. Wie man sieht, findet sich bei der in Figur 2 gezeigten Erfassungssicht in dem Feld "Ledger-Gruppe" auch kein Eintrag. Obwohl der in Figur 2 gezeigte Belegdatensatz für alle Hauptbücher relevant ist, ist er nicht für alle Rechnungslegungsvorschriften ausreichend detailliert. Beispielsweise muß für den Anhang eines Konzernabschlusses nach IAS oder US-GAAP eine Segmentberichterstattung erstellt werden, was für einen lokalen Abschluß nicht unbedingt erforderlich ist.

Für eine umfassende Segmentberichterstattung ist es daher vorteilhaft, einen Geschäftsvorfall, der mehrere Segmente betrifft, sowohl im Soll als auch im Haben auf die verschiedenen Segmente aufzuteilen. Für manche Rechnungslegungsvorschriften und interne Berichte genügt aber eine Aufteilung des Aufwands, wie sie in der in Figur 2 gezeigten Erfassungssicht zu sehen ist.

Um für die einzelnen Segmente eines Unternehmen eine vollständige Bilanz erstellen zu können, wie es beispielsweise nach IAS gefordert ist, werden aus den Positionen eines Belegdatensatzes, die mehrere organisatorische Einheiten des Unternehmens betreffen, Teilpositionen erzeugt, in denen der Buchungsbetrag der jeweiligen Position in anteilige Teilbeträge aufgeteilt wird. Jede Teilposition wird zusammen mit ihrem Teilbetrag der betreffenden organisatorischen Einheit des Unternehmens zugeordnet.

Dabei ist es möglich aus dem allgemeinen Datenteil eines Belegdatensatzes zusätzlich einen hauptbuchspezifischen Datenteil zu erzeugen. In dem hauptbuchspezifischen Datenteil sind aus dem allgemeinen Datenteil abgeleitete Buchungsinformationen gespeichert, die (nur) für das jeweilige Hauptbuch relevant sind. Verteilt sich der Aufwand einer Rechnung auf mehrere organisatorische Einheiten (im gezeigten Beispiel die Segmente SEG A und SEG B), werden für jeden Buchungsbetrag Belegzeilen erzeugt, in denen jeweils ein Buchungsteilbetrag der betreffenden Einheit zugeordnet wird. Das kann automatisch erfolgen oder auch manuell initiiert werden. Die betreffenden Einheiten können dabei explizit im allgemeinen Datenteil eines Belegdatensatzes angegeben werden oder automatisch aus der Angabe von spezielleren organisatorischen Einheiten eines Unternehmens, z.B. Profitcentern, abgeleitet werden.

Der Betrag einer Verbindlichkeit gegenüber einem Kreditor und der Betrag einer Eingangssteuer können bei einer Belegerfassung aus der Eingangsrechnung übertragen werden und brauchen deshalb vorerst nicht auf die betreffenden Segmente verteilt werden (siehe Zeilen 1 und 4 in Figur 2). Beim Erstellen eines hauptbuchspezifischen Datenteils für einen Belegdatensatz wird deshalb zunächst geprüft, ob in dem allgemeinen Datenteil des Belegdatensatzes Buchungsteilbeträge verschiedenen organisatorischen Einheiten (z.B. Segmenten) eines Unternehmens zugeschrieben werden. Falls dies der Fall ist, werden in dem hauptbuchspezifischen Datenteil Buchungsbeträge im Verhältnis der Buchungsteilbeträge den entsprechenden organisatorischen Einheiten zugeschrieben. Bei dem gezeigten Beispiel sind dies der Betrag der Verbindlichkeit gegenüber dem Kreditor (Figur 2, Zeile 1) und der Betrag der Eingangssteuer (Figur 2, Zeile 4).

Die Aufteilung dieser Positionen erfolgt automatisch bei der Verbuchung. Dabei wird automatisch geprüft, für welche Hauptbücher die im allgemeinen Datenteil angegebenen Segmente als Zusatzkontierung relevant sind. Für jedes dieser Hauptbücher wird ein hauptbuchspezifischer Datenteil erzeugt, der den Belegdatensatz ergänzt, indem eine oder mehrere Positionen in Teilpositionen aufgeteilt werden.

Figur 3 zeigt ein Beispiel einer solchen hauptbuchabhängigen Sicht (Hauptbuchsicht) des anhand der in Figur 2 gezeigten Erfassungssicht erläuterten Belegdatensatzes. Wie man darin sieht, sind bei dieser hauptbuchabhängigen Sicht alle Buchungspositionen jeweils in Teilbeträgen auf die beiden Teilsegmente SEG A und SEG B verteilt, so daß sich insgesamt sechs Buchungszeilen ergeben. Für jede dieser Buchungszeilen wird angegeben, auf welcher Zeile der Erfassungssicht sie beruht (2. Spalte in Fig. 3).

Ein Vorteil dieser Vorgehensweise liegt darin, daß der Belegkopf und der allgemeine Datenteil eines Belegdatensatzes nur einmal in der Datenbank gespeichert werden müssen und die hauptbuchspezifischen Datenteile bei Bedarf automatisch erzeugt werden können. Auf diese Weise läßt sich das von der Datenbank zu verwaltende Datenvolumen verringern.

Für Hauptbücher, bei denen eine Aufschlüsselung der Buchungsbeträge nach Segmenten nicht oder nur teilweise erforderlich ist, werden hauptbuchspezifische Datenteile erzeugt, die entsprechend weniger Positionen (Belegzeilen) enthalten.

Für jedes Hauptbuch kann in der Summentabelle ein Summeneintrag erzeugt werden, der in einem Summendatenteil eine Summe von Buchungsbeträgen eines Buchungskontos der Belegdatensätze enthält. Diese Summeneinträge können laufend aktualisiert werden, so daß auch neu hinzugekommene Belegdatensätze berücksichtigt werden. Sie können aber auch periodisch oder zu voreinstellbaren Zeitpunkten vollständig neu berechnet werden.

Jedem Summeneintrag kann ein logischer Schlüssel zugeordnet werden, der angibt, nach welchen Kriterien Buchungsbeträge in dem betreffenden Summeneintrag aufaddiert werden. Der Schlüssel kann eine Reihe von logischen Schlüsselfeldern umfassen, die als solche Kriterien beispielsweise ein Buchungskonto, ein Profitcenter, ein Segment, eine Buchungsperiode o.ä. spezifizieren. Der Schlüssel gibt also an, welche Buchungsbeträge von welchem Buchungskonto aufzuaddieren sind, also welche Belegpositionen zu berücksichtigen sind.

Indem die Zuordnung zu einem bestimmten Segment über das Schlüsselfeld in die Summentabelle aufgenommen wird, kann für die betreffenden Hauptbücher basierend auf den Summeneinträgen zusätzlich eine Auswertung nach Segmenten, also eine sogenannte Segmentberichterstattung erfolgen. Eine solche Vorgehensweise ist natürlich nicht nur auf Segmente beschränkt, sondern auch auf weitere Entitäten, wie zum Beispiel Profitcenter als interne Verantwortungsbereiche, oder auch branchenspezifische Entitäten, wie zum Beispiel Titel in der Medienbranche, anwendbar. Durch ein erfindungsgemäßes Verfahren wird es also möglich, Berichte, die man für den Abschluß eines Konzerns benötigt, zum Beispiel für eine Bilanz, auch für eine Segmentberichterstattung oder interne Berichte über andere Entitäten zu verwenden.

Datenbanken sind wegen der üblichen Architektur auf eine bestimmte Zahl Schlüsselfelder beschränkt, z.B. auf 16. Um - in diesem Beispiel - einem Summeneintrag trotzdem mehr als sechzehn Schlüsselfelder zuweisen zu können, enthält der Schlüssel jeweils sieben Nummern, die jeweils mit sieben ihnen zugeordneten Schlüsseltabellen in eine ganz bestimmte Kombination von Ausprägungen von logischen Schlüsselfeldern übersetzt werden. Auf diese Weise läßt sich eine nahezu beliebig große Anzahl logischer Schlüsselfelder realisieren, so daß für eine entsprechend große Anzahl von Kriterien wie Konto, Profitcenter, Segment, Buchungsperiode u.ä. Summeneinträge gebildet werden können. Selbstverständlich kann dabei auch eine größere oder kleinere Anzahl von Schlüsseltabellen mit einer entsprechenden Anzahl von Nummern im Schlüssel verwendet werden. Insbesondere kann einem Anwender die Möglichkeit gegeben werden selbst weitere Kriterien vorzugeben und in die Schlüsseltabellen aufzunehmen.

Mit dem beschriebenen Verfahren können Teilbeträge eines Buchungsbetrags verschiedenen Segmenten, Profit Centern oder anderen organisatorischen Einheiten zugeschrieben werden, so daß Kosten und Erträge der verschiedenen Segmente durch eine Auswertung der in der Datenbank gespeicherten Belegdatensätze leicht ermittelt werden können. Der Datenteil eines Belegdatensatzes kann ohne weiteres auch eine wesentlich größere Anzahl von Eingabefeldern pro Zeile enthalten, als dies in den gezeigten Figuren der Fall ist, so daß neben Segmenten beispielsweise für die Medienbranche einzelne Titel erfaßt werden können und eine Segmentberichterstattung oder interne Berichterstattung über verschiedene Projekte beliebig detailliert erfolgen kann, indem die verschiedenen Einträge der Datenbank ausgewertet werden.

Bei dem Ausführungsbeispiel der Figuren 1 bis 3 erzeugt ein erfindungsgemäßes Computerprogramm für den Belegdatensatz zwei zusätzliche Zeilen, in denen auf dem Konto 1600 jeweils GBP 400,-- bzw. 600,-- den Segmenten SEG A und SEG B zugeschrieben werden. Für ein Belegsplitting, bei dem Teilbeträge verschiedenen Profit Centern zugeschrieben werden, genügt es, wenn die Profit Center in den Sachkontenzeilen (i.d.R. Aufwand oder Ertragszeilen) vom Buchhalter erfasst werden. Für das oder die anderen Konten erzeugt das Datenverarbeitungsprogramm selbständig ein entsprechendes Belegsplitting, so daß im Prinzip auch für einzelne Profit Center, Segmente oder andere organisatorische Einheiten eines Unternehmens eine Bilanz erstellt werden kann.

Ob die einem Belegdatensatz zugrundeliegenden Daten nun von einem Buchhalter über eine Eingabemaske eingegeben oder elektronisch über eine Schnittstelle empfangen werden, ist für den Ablauf eines Belegsplittings unbedeutend. Vorteilhaft ist aber, daß das Belegsplitting vor einem Berechnen von Summen für die Summeneinträge der Summentabelle erfolgt. Auf diese Weise wird sichergestellt, daß alle Positionen in dem erforderlichen Maßen in Teilpositionen aufgeteilt sind, bevor die Belegdatensätze inhaltlich für die Buchhaltung ausgewertet werden.

Die Teilpositionen können deshalb nicht nur für eine spezielle Segmentbuchhaltung zur Verfügung stehen, sondern können überall in der zentralen Buchhaltungsdatenbank des Unternehmens zugänglich gemacht werden.
Bevorzugt geschieht das Belegsplitting mittels einer Splittroutine, die in die Schnittstelle des Computersystems integriert ist, mit dem dieses Daten für Belegdatensätze von außerhalb erhält. Werden Buchungsdaten von außerhalb, beispielsweise über das Internet übertragen, kann das Belegsplitting online erfolgen.

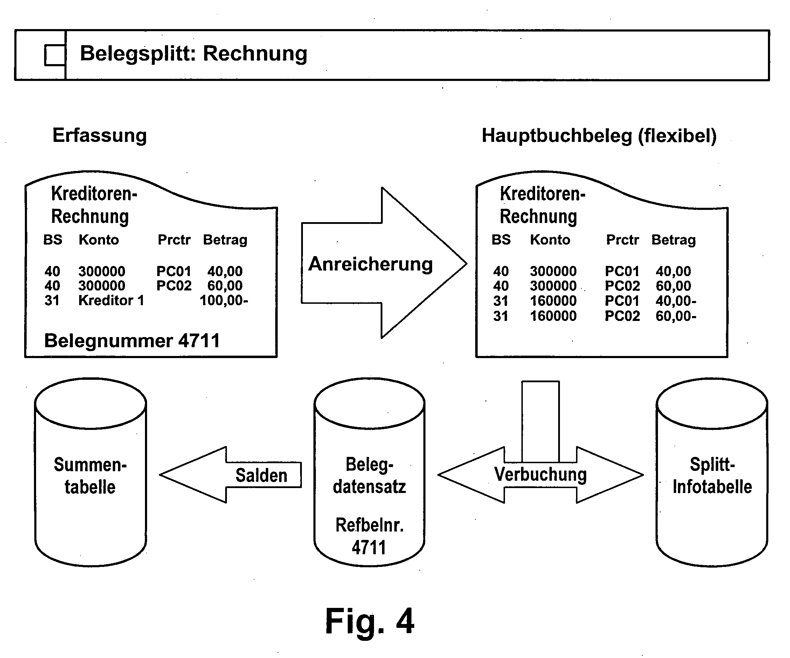

Im folgenden werden anhand des in Figur 4 gezeigten Diagramms die mit einem Belegsplitt verbundenen Verfahrensschritte am Beispiel der Behandlung einer eingegangenen Rechnung näher erläutert. Ein Buchhalter erzeugt in einem ersten Schritt mit einer Eingabemaske (ähnlich der in Figur 1 gezeigten) einen Belegdatensatz mit der Belegnummer 4711. Der Buchhalter gibt zu diesem Belegdatensatz drei Positionen in Form von Belegzeilen ein. In einer Belegzeile wird auf dem Konto "Kreditor" ein Betrag EUR 100,-- als Verbindlichkeit verbucht. In den beiden anderen Belegzeilen wird auf dem Konto 300000 den Kostenstellen PC01 und PC02 jeweils ein Teilbetrag von EUR 40,-- bzw. EUR 60,-- als Aufwand verbucht.

Anhand des vom Buchhalter im Kopfteil spezifizierten Geschäftsvorfalls "Kreditorenrechnung" erkennt das Datenverarbeitungsprogramm, daß die Verbindlichkeiten im Verhältnis der Aufwandsbeträge zu splitten sind. In einem Anreicherungsschritt erzeugt deshalb das Datenverarbeitungsprogramm aus diesen Daten einen vollständigen Belegdatensatz, der in Figur 3 als Hauptbuchbeleg bezeichnet ist. Der vollständige Belegdatensatz im Hauptbuch enthält nun auch das zum Konto Kreditor zugehörige Hauptbuchkonto 160000, wobei der Buchungsbetrag von EUR 100,-- gemäß dem Verhältnis der Teilbeträge auf dem Konto 300000 den einzelnen Kostenstellen PC01 und PC02 zugeschrieben wird. Dieser vollständige Belegdatensatz wird in einer Belegdatenbank gespeichert, wobei zusätzlich in einer Splitt-Infotabelle ein Eintrag erzeugt wird, der auf den Belegsplitt im Belegdatensatz 4711 hinweist.

In der Splitt-Infotabelle können zusätzlich die Teilbeträge der erzeugten Teilpositionen oder deren Verhältnisse unter Angabe der ihnen zugeordneten organisatorischen Einheiten gespeichert werden. Es kann aber auch auf Regeln, nach denen die Aufteilung der Beträge erfolgen soll und die an einer anderen Stelle der Datenbank abgelegt sind, verwiesen werden. Für das vorliegende Beispiel bedeutet dies, daß z.B. in der Splitt-Infotabelle die Information gespeichert wird, daß im Belegdatensatz 4711 ein Teilbetrag von EUR 40,-- der Kostenstelle PC01 und ein Teilbetrag von EUR 60,-- der Kostenstelle PC02 zugeschrieben wird. Der Zeitpunkt zu dem der Belegsplitt erfolgt ist, also zum Anreichern des Datenteils des Belegdatensatzes Teilpositionen erzeugt wurden, kann im Belegkopf des Belegdatensatzes und in der Splitt-Infotabelle gespeichert werden.

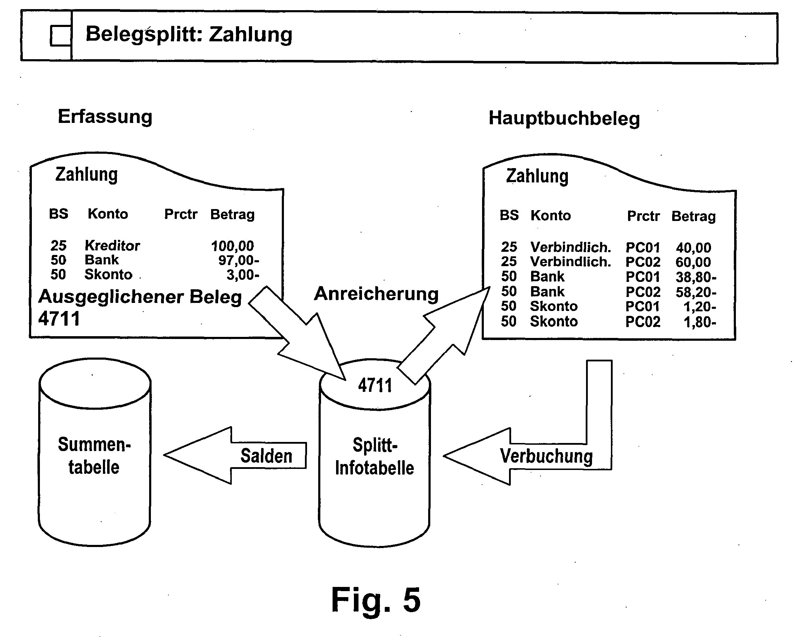

Anhand von Fig. 5 wird erläutert, wie eine Zahlung behandelt wird, die auf die dem Buchungsbeleg 4711 zugrundeliegenden Rechnung erfolgt ist. Bei dem in Fig. 5 gezeigten Diagramm wird davon ausgegangen, daß bei rascher Bezahlung ein Skonto von 3% gewährt wird. Der Zahlungsbetrag von EUR 97,-- im Haben auf dem Konto "Bank" führt dabei zu einem Ausgleich in Höhe von EUR 100,-- im Soll auf dem Konto "Kreditor" und zu einem Skontoerlös im Haben auf dem Konto "Skonto".
Vorteilhaft ist, daß ein Buchhalter beim Erfassen dieser Zahlung sich nicht mehr um die Aufteilung der Buchungsbeträge im Hinblick auf die beiden Kostenstellen PC01 und PC02 kümmern muß. Es genügt, eine Bezugnahme auf den Beleg einzugeben, z.B. in der in Fig. 1 gezeigten Eingabemaske in das Eingabefeld "Übergreifende Nummer" (in Fig. 1 abgekürzt "Übergreifd. Nr.")die Belegnummer 4711 des Buchungsbelegs einzugeben, mit dem die Rechnung erfaßt wurde, auf welche nun die Zahlung erfolgt ist. Ein entsprechendes Eingabefeld, im Beispiel "Übergreifende Nummer", gehört bevorzugt zum Belegkopf des Belegdatensatzes.

Nachdem der Buchhalter diese Daten über die Eingabemaske in die Datenbank eingegeben hat, reichert das erfindungsgemäße Datenverarbeitungsprogramm - wie in Fig. 5 veranschaulicht - den Belegdatensatz an. Dazu werden über die Nummern der auszugleichenden Belege die zugehörigen Informationen aus der Splitt-Infotabelle gelesen, und im Ausgleichsbeleg entsprechende Teilpositionen für die verschiedenen organisatorischen Einheiten erzeugt.
Auf dem Soll-Konto wird der Buchungsbetrag EUR 100,-- in Teilbeträgen von EUR 40,-- bzw. EUR 60,-- den Profitcentern PC01 bzw. PC02 zugeschrieben. Im selben Verhältnis von 40 zu 60 wird auch der Buchungsbetrag von EUR 97,-- des Kontos "Bank" auf die beiden Profitcenter PC01 und PC02 verteilt. Wie man in Fig. 5 erkennt, wird deshalb auf dem Konto "Bank" dem Profitcenter PC01 ein Teilbetrag von EUR 38,80 und dem Profitcenter PC02 ein Buchungsbetrag von EUR 58,20 zugeschrieben. Im gleichen Verhältnis wird auch der Buchungsbetrag von EUR 3,-- des Buchungskontos "Skonto" in Teilbeträgen von EUR 1,20 bzw. EUR 1,80 den beiden Profitcentern PC01 und PC02 zugeschrieben.

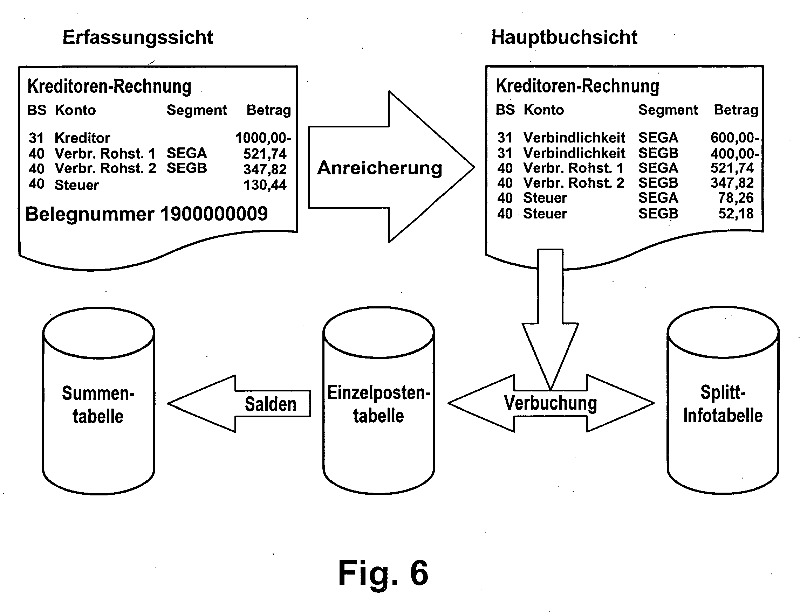

Im folgenden werden anhand des in Figur 6 gezeigten Diagramms die mit einem Belegsplitt verbundenen Verfahrensschritte näher erläutert. Ein Buchhalter erzeugt in einem ersten Schritt mit Hilfe der in Figur 1 gezeigten Eingabemaske, zum Beispiel für den Geschäftsvorfall einer Kreditorenrechnung, einen Belegdatensatz mit der Belegnummer 1900000009. Der Buchhalter gibt dazu vier Positionen (Belegzeilen) ein.

In der ersten Belegzeile wird für den Kreditor "DEMO ROT" (vgl. Figur 2) ein Betrag von GBP 1.000,-- als Verbindlichkeit erfaßt. In der folgenden Zeile wird für den Rohstoff 1, der dem Segment SEG A zugeordnet ist, ein Aufwand von GBP 521,74 erfaßt. In Zeile 3 wird ein Aufwand von GBP 374,82 für den Rohstoff 2 erfaßt und dem Segment SEG B zugeschrieben. Beide Aufwände werden auf dem Konto 400000 gebucht. Der Rechnungsbetrag von GBP 1.000,-- enthält insgesamt eine Eingangssteuer von GBP 130,44, die in Belegzeile 4 aufgeführt ist. Anhand des in dem Belegkopf des Belegdatensatzes spezifizierten Geschäftsvorfalls "Kreditorenrechnung" erkennt der zu dem erfindungsgemäßen Programm gehörende Online-Splitter, daß sowohl die Verbindlichkeit (Zeile 1) als auch die Steuer (Zeile 4) entsprechend dem Verhältnis der Aufwandsbeträge (Zeile 2 und Zeile 3) auf die beteiligten Segmente SEG A und SEG B zu verteilen sind und erzeugt in einem Anreicherungsschritt aus diesen Daten, beispielsweise für ein Hauptbuch nach IAS, zwei zusätzliche Belegzeilen, wie es in Figur 3 zu sehen ist.

Mit dem vollständigen, um den spezifischen Datenteil ergänzten Belegdatensatz wird der Buchungsbetrag von GBP 1000,-- gemäß dem Verhältnis der Teilbeträge auf dem Konto 400000 (siehe Fig. 3) den einzelnen Segmenten SEG A und SEG B zugeschrieben. Dieser vollständige Belegdatensatz wird in einer Belegdatenbank gespeichert, wobei zusätzlich in einer Splitt-Infotabelle ein Eintrag erzeugt wird, der auf den Belegsplitt im Buchungsbeleg 1900000009 hinweist. Aus den Belegdatensätzen der Belegdatenbank werden in einem nächsten Schritt Summeneinträge einer Summentabelle erzeugt.

Ebenso wie bei einem einzelnen Belegdatensatz auf dem Konto und dem zugeordneten Gegenkonto insgesamt jeweils derselbe Buchungsbetrag verbucht werden muß, damit der Belegdatensatz ausgeglichen ist, müssen bei einer Bilanz Soll und Haben ausgeglichen sein. Für die Gesamtbilanz eines Unternehmens wird dies durch ausgeglichene Buchungsdatensätze gewährleistet.

Will man jedoch für einzelne organisatorische Einheiten des Unternehmens eine Bilanz erstellen, so kann es bei Transaktionen zwischen verschiedenen organisatorischen Einheiten vorkommen, daß diese nicht vollständig erfaßt werden und deshalb Konten und Gegenkonten auf der Ebene einzelner organisatorischer Einheiten des Unternehmens nicht ausgeglichen sind.

Überläßt beispielsweise das Segment A aus seinen Vorräten dem Segment B Materialvorräte (z.B. 1000 Schrauben), so hat dies auf die Unternehmensbilanz keine Auswirkungen. Um für die Segmente A und B jeweils eine eigene Bilanz erstellen zu können, genügt es nicht, diesen Materialstrom nur auf einem Materialkonto, das beispielsweise über ein gemeinsames Lager geführt wird, zu erfassen. Der Materialstrom muß zusätzlich auch auf einem Gegenkonto zu dem Materialkonto verbucht werden, um Aufwand und Ertrag für die betreffenden Segmente in einer Bilanz erfassen zu können.

Ein erfindungsgemäßes computerimplementiertes Verfahren umfaßt deshalb in bevorzugter Ausführungsform eine Prüfroutine, die für mindestens eine, vorzugsweise alle organisatorischen Einheiten des Unternehmens prüft, ob für mindestens ein Konto, vorzugsweise für alle Konten, die auf dem jeweiligen Konto einer bestimmten organisatorischen Einheit zugeordnete Summe mit der Summe übereinstimmt, die auf dem zugehörigen Gegenkonto dieser organisatorischen Einheit zugeordnet wird. Falls dies der Fall ist, so sind Konto und Gegenkonto für die betreffende organisatorische Einheit ausgeglichen. Falls dies nicht der Fall ist, so erzeugt die Prüfroutine einen Korrekturbuchungsdatensatz, der in einer Position die fehlende Gegenbuchung enthält, so daß Konto und Gegenkonto auch auf Segmentebene ausgeglichen sind.

Auf diese Weise sind in der Datenbank der zentralen Buchhaltung alle notwendigen Daten vorhanden, um sowohl Aufwand als auch Ertrag einzelner organisatorischer Einheiten eines Unternehmens erfassen und bei Bedarf für interne Berichte eine Bilanz erstellen zu können.

Um mit den in der Datenbank gespeicherten Belegdatensätzen einen Abschluß zu erstellen, werden in einem ersten Schritt in einer Summentabelle Summeneinträge erzeugt, die in einem Summendatenteil eine Summe von Buchungsbeträgen eines Buchungskontos der Belegdatensätze enthalten. Diese Summeneinträge werden regelmäßig automatisch aktualisiert, um zwischenzeitlich neu hinzugekommene Belegdatensätze zu erfassen. Sie können aber auch zu voreinstellbaren Zeiten vollständig neu berechnet werden.

Für jede organisatorische Einheit und für jedes Hauptbuch, Buchungskreis, Buchungsperiode und Buchungskonto kann ein Summeneintrag erzeugt werden, wobei flexibel weitere Klassifizierungen einstellbar sind. Diese zusätzlichen Klassifizierungen können für jedes Hauptbuch, d.h. für jede Rechnungslegungsvorschrift individuell eingestellt werden. Damit kann für jede Rechnungslegungsvorschrift, repräsentiert durch das jeweilige Hauptbuch, ein Geschäftsbericht oder ein interner Bericht einfach und schnell entsprechend den Vorgaben der Konzernleitung erstellt werden. Aus den einzelnen Summeneinträgen läßt sich in einem nächsten Schritt für jede relevante Rechnungslegungsvorschrift eine Bilanz erstellen. Dies kann automatisch geschehen, da die einzelnen Summeneinträge, die zu einem bestimmten Hauptbuch gehören, jeweils einer bestimmten Rechnungslegungsvorschrift entsprechen.

## Patentansprüche

1. Computerimplementiertes Verfahren zum Erstellen einer Datenbank für Buchhaltungszwecke, mit der sich Abschlüsse für die Rechnungslegung eines Unternehmens erstellen lassen, umfassend die folgenden Schritte:
- Speichern von Belegdatensätzen aus Buchungsbelegen in einer Belegdatenbank, wobei die Belegdatensätze ein Belegkopf und ein Datenteil umfassen, wobei der Datenteil Einträge für mindestens zwei Positionen aufweist, die jeweils einen Buchungsbetrag und ein zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle,
**dadurch gekennzeichnet, daß**
- vor dem Berechnen von Summen für die Summeneinträge der Summentabelle eine anteilige Zuordnung von mindestens einer Position des Belegdatensatzes zu zwei oder mehreren organisatorischen Einheiten des Unternehmens erfolgt,
- wobei aus der mindestens einen Position nach computerimplementierten Regeln Teilpositionen erzeugt werden, in den Teilpositionen der Buchungsbetrag der Position in anteilige Teilbeträge aufgeteilt und jede Teilposition zusammen mit ihrem Teilbetrag einer der organisatorischen Einheiten zugeordnet wird,
- in den Summeneinträgen für jede organisatorische Einheit, der eine oder mehrere Teilpositionen zugeordnet werden, jeweils mindestens eine Summe gespeichert wird,
- die Summen für die organisatorischen Einheiten nur mit Buchungsbeträgen aus Positionen oder Teilpositionen berechnet werden, die der jeweiligen organisatorischen Einheit zugeordnet sind.

2. Verfahren nach Anspruch 1, **dadurch gekennzeichnet, daß** für mindestens eines der Konten und sein dazugehörendes Gegenkonto für mindestens eine der organisatorischen Einheiten geprüft wird,
ob die Summe der Buchungsbeträge der Positionen und Teilpositionen, die dem Konto für die organisatorische Einheit zugeordnet sind, mit der Summe der Buchungsbeträge der Positionen und Teilpositionen, die dem dazugehörenden Gegenkonto für diese organisatorische Einheit zugeordnet sind, übereinstimmt, und
falls dies nicht der Fall ist, ein Korrekturbuchungsdatensatz erzeugt wird, der eine Position aufweist, mit der durch einen Gegenbuchungsbetrag eine Differenz der beiden Summen ausgeglichen wird, so daß Konto und Gegenkonto ausgeglichen sind.

3. Verfahren nach einem der vorhergehenden Ansprüche, **dadurch gekennzeichnet, daß** in dem Belegkopf der Belegdatensätze ein Belegdatum und/oder ein Buchungsdatum angegeben werden.

4. Verfahren nach einem der vorhergehenden Ansprüche, **dadurch gekennzeichnet, daß** in dem Belegkopf der Belegdatensätze ein Splittzeitpunkt angegeben wird, zu dem die Teilpositionen erzeugt wurden.

5. Verfahren nach einem der vorhergehenden Ansprüche, **dadurch gekennzeichnet, daß** in einer Splitt-Infotabelle gespeichert wird, bei welchen Belegdatensätzen welche Teilpositionen erzeugt wurden.

6. Verfahren nach Anspruch 5, **dadurch gekennzeichnet, daß** in der Splitt-Infotabelle die Teilbeträge der Teilpositionen oder deren Verhältnisse unter Angabe der ihnen zugeordneten organisatorischen Einheiten gespeichert sind.

7. Verfahren nach Anspruch 5 oder 6, **dadurch gekennzeichnet, daß** in der Splitt-Infotabelle auf Regeln verwiesen wird, die zur Erzeugung der Teilpositionen verwendet wurden.

8. Verfahren nach Anspruch 5, 6 oder 7, **dadurch gekennzeichnet, daß** geprüft wird, ob in einem ersten Belegdatensatz zusätzlich die Belegnummer eines zweiten Belegdatensatzes gespeichert ist, und falls dies der Fall ist mittels der Splitt-Infotabelle der Datenteil des ersten Belegdatensatzes durch Erzeugen von Teilpositionen angereichert wird, in denen der Buchungsbetrag des ersten Belegdatensatzes in Teilbeträgen entsprechend dem Verhältnis der Teilbeträge des zweiten Belegdatensatzes oder der verwendeten Regeln denselben organisatorischen Einheiten zugeschrieben wird, denen die entsprechenden Teilbeträge in dem zweiten Belegdatensatz zugeordnet sind.

9. Verfahren nach einem der vorhergehenden Ansprüche, **dadurch gekennzeichnet, daß** in der Eingabemaske die Eingabefelder des Belegkopfs oberhalb von den Eingabefeldern des Datenteils angeordnet sind.

10. Verfahren nach einem der vorhergehenden Ansprüche, **dadurch gekennzeichnet, daß** in einem weiteren Eingabefeld des Belegkopfs eingetragen werden kann, für welches Hauptbuch oder für welche Hauptbücher der zugehörige Einzelposteneintrag relevant ist.

11. Verfahren nach Anspruch 10, **dadurch gekennzeichnet, daß** ein Belegdatensatz, in dessen weiterem Eingabefeld kein Eintrag eingetragen wurde, für alle Hauptbücher berücksichtigt wird.

12. Verfahren nach einem der vorhergehenden Ansprüche, **dadurch gekennzeichnet, daß** in dem Belegkopf der Belegdatensätze ein Buchungskreis angegeben wird.

13. Verfahren zum erstellen eines buchhalterischen Kontenabschlusses, bei dem eine mit einem Verfahren nach einem der vorhergehenden Ansprüche erstellte Datenbank verwendet wird.

14. Computerlesbares Medium, das Softwareabschnitte umfaßt, die in den Speicher eines digitalen Computers geladen werden können und mit denen die Schritte eines Verfahrens nach einem oder mehreren der Ansprüche 1 bis 13 ausgeführt werden, wenn die Softwareabschnitte auf einem Computer laufen.

15. Computerprogrammprodukt mit einem computerlesbaren Medium nach Anspruch 14.

16. Datenbanksystem, enthaltend ein computerlesbares Medium nach Anspruch 15.

17. Datenstruktur eines elektronischen Buchhaltungsbeleges umfassend einen Belegkopf und einen Datenteil mit Positionen, **dadurch gekennzeichnet, daß** im Datenteil zwei oder mehrere Positionen zwei oder mehreren organisatorischen Einheiten eines Unternehmens zugeordnet sind.
